# EUROPEAN PATENT APPLICATION

(11) **EP 4 159 783 A1**
(43) Date of publication of application: **05.04.2023**
(21) Application number: 21306359.7
(22) Date of filing: 30.09.2021
(51) Int. Cl.: C08G 59/17, C08G 59/22, C08G 59/40, C08G 59/42

(54) **BRANCHED ACRYLATE FUNCTIONAL OLIGOMERS**

(71) Applicant: ARKEMA FRANCE, 92700 Colombes (FR)
(72) Inventor: LI, Ling, EXTON, 19341 (US); HE, Yuhong, EXTON, 19341 (US); SHURDHA, Endrit, EXTON, 19341 (US)
(74) Representative: Arkema Patent

(57) **Abstract**

A curable oligomer is the reaction product of: x equivalents of at least one diepoxy a); y1 equivalents of at least one unsaturated carboxylic acid b); and y2 equivalents of at least one polycarboxylic acid c) comprising at least three carboxylic acid groups, x is defined as the number of moles of epoxy groups in component a), y1 is defined as the number of moles of carboxylic acid groups in component b), and y2 is defined as the number of moles of carboxylic acid groups in component c).

## Description

### FIELD OF THE INVENTION

The present invention relates to curable acrylate-functional oligomers that include branching and are suitable for actinically curable compositions. The cured products made from such compositions may be used as coatings, inks, over-varnishes, adhesives, additive manufacturing resins (such as 3D printing resins), molding resins, sealants, composites, antistatic layers, electronic applications, recyclable materials, smart materials capable of detecting and responding to stimuli, and biomedical materials.

### BACKGROUND

Actinically curable compositions that provide uniform crosslinking and improved toughness and gloss are desired. Also desirable are such compositions that when cured, provide enhanced elasticity.

Other efforts to produce such materials are summarized as follows:
US 9234073 discloses a copolymer obtainable by condensation of i) 90 to 99.5 mol %, based on components to ii), of succinic acid; ii) 0.5 to 10 mol %, based on components i to ii, of one or more C8-C20 dicarboxylic acids; and iii) 98 to 102 mol %, based on components i to ii, of 1,3-propanediol or 1,4-butanediol.
US 7041749 discloses oligomeric compositions formed from cycloaliphatic epoxides and Michael addition polyacrylate resins, synthesized from multifunctional acrylates and β-dicarbonyl Michael donors, specifically β-keto esters, β-diketones, β-ketoamides or β-ketoanilides or combinations thereof.
US 5891960 discloses a polymer which is the reaction product of (a) a compound containing pendant and/or terminal hydroxyl or epoxy functional groups and (b) citric acid or citric acid anhydride.
US 5548005 discloses aqueous, radiation-curable binders and binder dispersions that contain (A) a radiation-curable binder, and (B) a radiation-curable, hydrophilic polyepoxy-acrylate.
US 5196485 discloses a composition including a polyepoxide component having an epoxy equivalent weight on resin solids of less than about 600. The composition further includes a polyacid curing agent having an average acid functionality of greater than 2.
US 5171763 discloses a curable composition for dental restoration comprising a vinyl monomer containing not less than 30% by weight of an acid group-containing vinyl monomer represented by the formula 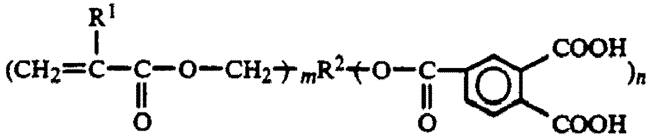 wherein each R¹ may be the same or different and each denotes a hydrogen atom or a methyl group, R² denotes a trivalent to hexavalent organic residue having 1 to 30 carbon atoms which residue may have an ether linkage and/or an ester linkage, m is an integer of 2 to 4, n is an integer of 1 or 2, an ion dissolving filler that dissolves a polyvalent metallic ion, and a polymerization initiator.
US 2016/0256363 discloses a dental composite including a non-bisphenol-based epoxy acrylate oligomer.
US 2014/0336302 discloses a water soluble epoxy acrylate resin composition comprising a reaction product of (a) at least one diepoxide resin; (b) at least one carboxylic acid; and (c) at least one basic reagent in an amount sufficient to form a water soluble epoxy acrylate resin product.
US 2008/0206471 discloses coating compositions excelling in storage stability and curability, which comprise carboxyl group- and/or cyclic acid anhydride group-containing compound; polyepoxide; and latent curing catalyst composed of tertiary amine and acidic phosphoric acid ester.
EP 2350162 B1 discloses a copolymer obtained by condensation of i) 92 to 98 mol%, based on components i to ii, of succinic acid; ii) 2 to 8 mol%, based on components i to ii, of azelaic acid, sebacic acid and/or brassylic acid; iii) 98 to 102 mol%, based on components i to ii, of 1,3-propanediol or 1,4-butanediol, and iv) 0.01% to 5% by weight, based on the total weight of said components i to iii, of a crosslinker iva, selected from the group consisting of tartaric acid, citric acid, malic acid, trimethylolpropane, trimethylolethane, pentaerythritol, polyethertriols, glycerol, trimesic acid, trimellitic acid, trimellitic anhydride, pyromellitic acid and pyromellitic anhydride and/or a chain extender iv_{b} selected from the group consisting of a difunctional isocyanate, isocyanurate, oxazoline and epoxide.
WO 1995027760 discloses a composition containing a polyepoxide which is essentially free of silyl moieties, a polyacid curing agent and an additive in an amount effective to improve mar resistance of a solution polymer of an ethylenically unsaturated monomer component containing a polymerizable alkoxy silane monomer.
Klee at al., Synthesis and investigation of α,ω-methacryloyl poly (epoxide-carboxylic acid) and α,ω-methacryloyl poly (epoxide-phenol) macromonomers; Acta Polymer., 44, 163-167 (1993) discloses synthesis of *α,ω*-methacryloyl terminated macromonomers containing epoxide-carboxylic acid and epoxide-phenolic repetitive units.

There is thus a need for actinically curable oligomers that provide cured materials having good toughness, hardness, abrasion resistance, solvent resistance, and elastic properties.

### SUMMARY

A curable oligomer is provided. The curable oligomer comprises, consists of or consists essentially of the reaction product of:
- x equivalents of a component a) comprising at least one diepoxy;
- y1 equivalents of a component b) comprising at least one unsaturated carboxylic acid; and
- y2 equivalents of a component c) comprising at least one polycarboxylic acid bearing at least three carboxylic acid groups;
wherein x is the number of moles of epoxy groups in component a), y1 is the number of moles of carboxylic acid groups in component b), and y2 is the number of moles of carboxylic acid groups in component c); and
the ratio of x:(y1+y2) is from 1:1.1 to 1:0.90, in particular from 1:1.09 to 1:0.91, more particularly from 1:1.08 to 1:0.92.

Also provided is a method of preparing a curable oligomer. The method comprises, consists of or consists essentially of reacting a mixture comprising, consisting of or consisting essentially of the following:
- x equivalents of a component a) comprising at least one diepoxy;
- y2 equivalents of a component c) comprising at least one polycarboxylic acid bearing at least three carboxylic acid groups; and
- optionally z1 equivalents of a component b) comprising at least one unsaturated carboxylic acid;

to provide an epoxy-capped prepolymer;
and then reacting the epoxy-capped prepolymer with z2 equivalents of a component b) comprising at least one unsaturated carboxylic acid;
wherein z1+z2 = y1,
x is the number of moles of epoxy groups in component a), y1 is the number of moles of carboxylic acid groups in component b), and y2 is the number of moles of carboxylic acid groups in component c).

According to another embodiment, a method of preparing a curable oligomer is provided. This method comprises, consists of or consist essentially of reacting a mixture comprising, consisting of or consisting essentially of the following:
- x equivalents of a component a) comprising at least one diepoxy;
- y1 equivalents of a component b) comprising at least one unsaturated carboxylic acid; and
- y2 equivalents of a component c) comprising at least one polycarboxylic acid bearing at least three carboxylic acid groups,

to provide a curable oligomer;
wherein x is the number of moles of epoxy groups in component a), y1 is the number of moles of carboxylic acid groups in component b), and y2 is the number of moles of carboxylic acid groups in component c), the ratio of x:(y1+y2) is from 1:1.1 to 1:0.90, in particular from 1:1.09 to 1:0.91, more particularly from 1:1.08 to 1:0.92.

In the methods of the invention, one or both of the following conditions i) and ii) may be achieved:
i) the ratio of y2:x is at most 1:4, in particular at most 1:4.5, more particularly at most 1:5; and/or
ii) the at least one diepoxy a) comprises at least one compound selected from an aliphatic diepoxy, a bisphenol-based diglycidyl ether and combinations thereof; in particular an aliphatic diglycidyl ether, bisphenol-A-diglycidyl ether and combinations thereof; more preferably bisphenol-A-diglycidyl ether.

### DETAILED DESCRIPTION

### Curable oligomer

The inventors have found that certain actinically curable branched oligomers prepared from diepoxy, tri- or higher carboxylic acids, and unsaturated carboxylic acids provide good physical properties in terms of toughness, hardness, abrasion resistance, solvent resistance, and elastic properties upon cure, especially by radiation, such as ultraviolet light. These desirable properties were found to be related to the structure of the oligomers and, in particular, to be related to certain molar ratios of the monomers used to prepare the branched, acrylate functional oligomers. The branched oligomers are defined herein as being the reaction product of certain reactants, and as such, will be understood by a person having ordinary skill in the art, to be comprised of residues of the reactants remaining in the thus-formed oligomers.

### Component a)

The curable oligomer of the invention is derived from the reaction of one or more epoxy compounds. The one or more epoxy compounds used to obtain the curable oligomer are herein referred to as component a).

As used herein, the term "epoxy compound" means a compound bearing at least one epoxy group.

The curable oligomer of the invention is obtained using x equivalents of component a).

As used herein, x is the number of moles of epoxy groups present in component a). x may be obtained by multiplying the number of moles of epoxy compound in component a) by its epoxide functionality (i.e. the number of epoxide groups on the epoxy compound). For example, if the oligomer of the invention is obtained using 1 mole of a diepoxy, x is equal to 2. If component a) comprises a mixture of epoxy compounds, then x corresponds to the total number of moles of epoxy groups in the mixture.

Component a) comprises, consists of or consists essentially of at least one diepoxy.

As used herein, the term "diepoxy" means a compound bearing two epoxy groups. As used herein, the term "compound bearing Z functional groups" means a compound having exactly Z functional groups.

As used herein the term "X consists essentially of Y" means that X comprises more than 90%, or more than 95%, or more than 98%, or more than 99%, or more than 99.5%, or more than 99.8%, or more than 99.9%, or more than 99.95%, or more than 99.99%, or more than 99.995%, or more than 99.999%, by weight of Y based on the weight of X.

Component a) may be substantially free of a compound bearing more than two epoxy groups.

As used herein the term "X is substantially free of Y" means that X comprises less than 10%, or less than 5%, or less than 2%, or less than 1%, or less than 0.5%, or less than 0.2%, or less than 0.1%, or less than 0.05%, or less than 0.01%, or less than 0.005%, or less than 0.001%, or even 0%, by weight of Y based on the weight of X.

Component a) may comprise, consist of or consist essentially of at least one diepoxy ether. As used herein, the term "diepoxy ether" means a compound bearing two epoxy groups and at least one ether bond (the ether bond being distinct from the cyclic ether bond in the epoxy groups). In particular, the diepoxy ether may bear two epoxy groups and at least two ether bonds (the ether bonds being distinct from the cyclic ether bonds in the epoxy groups).

Component a) may comprise, consist of or consist essentially of at least one diglycidyl ether. As used herein, the term "diglycidyl ether" means a compound bearing two glycidyl ether groups. As used herein, the term "glycidyl ether group" means a group of the following formula (I):

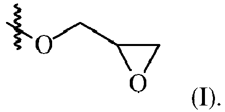

Component a) may comprise, consist of or consist essentially of at least one compound selected from an aromatic diepoxy, an aliphatic diepoxy and combinations thereof.

Component a) may comprise, consist of or consist essentially of at least one aromatic diepoxy. As used herein, the term "aromatic diepoxy" means a compound bearing two epoxy groups connected to one another by an aromatic linker.

As used herein, the term "aromatic linker" means a linker comprising at least one aromatic ring, preferably at least two aromatic rings, more preferably 2 or 3 aromatic rings. Araliphatic linkers, i.e. linkers comprising both an aromatic moiety and a non-aromatic moiety, are encompassed by the term aromatic linker.

Component a) may comprise, consist of or consist essentially of at least one aromatic diglycidyl ether. As used herein, the term "aromatic diglycidyl ether" means a compound bearing two glycidyl ether groups connected to one another by an aromatic linker. Such a compound may be represented by the following formula (II): 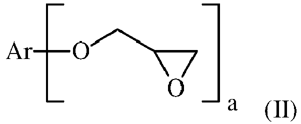 wherein Ar is an aromatic linker;
a is 2.

Component a) may comprise, consist of or consist essentially of at least one bisphenol-based diglycidyl ether. As used herein, the term "bisphenol-based diglycidyl ether" means a compound bearing two glycidyl ether groups connected to one another by an aromatic linker containing a moiety derived from a bisphenol. Such a compound may be represented by the above formula (II) wherein a is 2 and Ar is represented by the following formula (III): 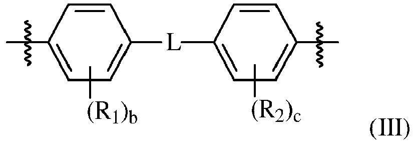 wherein L is a linker;
R₁ and R₂ are independently selected from alkyl, cycloalkyl, aryl and a halogen atom;
b and c are independently 0 to 4.

In particular, L may be a linker selected from bond, -CR₃R₄-, -C(=O)-, -SO-, -SO₂-, -C(=CCl₂)- and -CR₅R₆-Ph-CR₇R₈-;
wherein:
R₃ and R₄ are independently selected from H, alkyl, cycloalkyl, aryl, haloalkyl and
perfluoroalkyl, or R₃ and R₄, with the carbon atoms to which they are attached, may form a ring;
R₅, R₆, R₇ and R₈ are independently selected from H, alkyl, cycloalkyl, aryl, haloalkyl and perfluoroalkyl;
Ph is phenylene optionally substituted with one or more groups selected from alkyl, cycloalkyl, aryl and a halogen atom.

More particularly, Ar may be the residue of a bisphenol without the OH groups. A compound according to formula (III) wherein Ar is the residue of a bisphenol without the OH groups may be referred to as a bisphenol-based diepoxy ether, preferably a bisphenol-based diglycidyl ether. Examples of suitable bisphenols are bisphenol A, bisphenol AP, bisphenol AF, bisphenol B, bisphenol BP, bisphenol C, bisphenol C2, bisphenol F, bisphenol G, bisphenol M, bisphenol S, bisphenol P, bisphenol PH, bisphenol TMC, bisphenol-Z, dinitrobisphenol A, tetrabromobisphenol A and combinations thereof.

Component a) may comprise, consist of or consist essentially of at least one aliphatic diepoxy. As used herein, the term "aliphatic diepoxy" means a compound bearing two epoxy groups connected to one another by an aliphatic linker.

As used herein, the term "aliphatic linker" means a linker that does not comprise any aromatic rings. It may be a linear or branched, cyclic or acyclic, saturated or unsaturated, hydrocarbon linker. It may be substituted by one or more groups, for example selected from hydroxyl, halogen (Br, Cl, I, F), carbonyl, amine, carboxylic acid, -C(=O)-OR', -C(=O)-O-C(=O)-R', each R' being independently a C1-C6 alkyl. It may be interrupted by one or more bonds selected from ether (-O-), ester (-C(=O)-O- or -O-C(=O)-), amide (-C(=O)-NH- or -NH-C(=O)-), urethane (-NH-C(=O)-O- or -O-C(=O)-NH-), urea (-NH-C(=O)-NH-), carbonate (-O-C(=O)-O-), and mixtures thereof.

Component a) may comprise, consist of or consist essentially of at least one aliphatic diglycidyl ether. As used herein, the term "aliphatic diglycidyl ether" means a compound bearing two glycidyl ether groups connected to one another by an aliphatic linker. Such a compound may be represented by the following formula (IV): 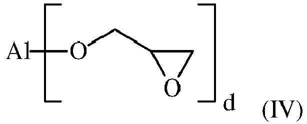 wherein Al is an aliphatic linker;
d is 2.

In particular, Al may be an alkylene optionally interrupted by one or more ether or ester bonds or Al may correspond to a partially or fully hydrogenated derivative of the linker of formula (III).

More particularly, Al may be the residue of a polyol P_{OH} without the OH groups. Examples of suitable polyols P_{OH} include ethylene glycol, 1,2- or 1,3-propylene glycol, 1,2-, 1,3- or 1,4-butylene glycol, 1,5-pentanediol, 1,6-hexanediol, 1,8-octanediol, 1,9-nonanediol, 1,10-decanediol, 1,12-dodecanediol, 2-methyl-1,3-propanediol, 2,2-diethyl-1,3-propanediol, 3-methyl-1,5-pentanediol, 3,3-dimethyl-1,5-pentanediol, neopentyl glycol, 2,4-diethyl-1,5-pentanediol, cyclohexanediol, 1,2- or 1,4-cyclohexanedimethanol, norbornene dimethanol, norbornane dimethanol, tricyclodecanediol, tricyclodecane dimethanol, hydrogenated bisphenol A, B, F or S, di-, tri- or tetraethylene glycol, di-, tri- or tetrapropylene glycol, di-, tri- or tetrabutylene glycol, a polyethylene glycol, a polypropylene glycol, a polytetramethylene glycol, a poly(ethylene glycol-co-propylene glycol), a sugar alcohol having two OH groups, a dianhydrohexitol (i.e. isosorbide, isomannide, isoidide),a polybutadiene diol, a polyester diol, a polyether diol, a polyorganosiloxane diol, a polycarbonate diol as well as the alkoxylated (e.g., ethoxylated and/or propoxylated) derivatives thereof and the derivatives obtained by ring-opening polymerization of ε-caprolactone initiated with one of the aforementioned diols.

In one embodiment, component a) may comprise, consist of, or consist essentially at least one compound selected from an aliphatic diepoxy, a bisphenol-based diglycidyl ether and combinations thereof; in particular an aliphatic diglycidyl ether, bisphenol-A-diglycidyl ether and combinations thereof; more preferably bisphenol-A-diglycidyl ether.

Component a) may comprise, consist of, or consist essentially of at least one compound selected from 1,4-butanediol diglycidyl ether, 1,3-butanediol diglycidyl ether, 1,6-hexanediol diglycidyl ether, neopentyl glycol diglycidyl ether, ethylene glycol diglycidyl ether a polyethylene glycol diglycidyl ether, propylene glycol diglycidyl ether a polypropylene glycol diglycidyl ether, 1,2 -or 1,4-cyclohexanedimethanol diglycidyl ether, hydrogenated bisphenol A diglycidyl ether, bisphenol-A-diglycidyl ether, bisphenol-AP-diglycidyl ether, bisphenol-AF-diglycidyl ether, bisphenol-B-diglycidyl ether, bisphenol-BP-diglycidyl ether, bisphenol-C-diglycidyl ether, bisphenol-C2-diglycidyl ether, bisphenol-F-diglycidyl ether, bisphenol-G-diglycidyl ether, bisphenol-M-diglycidyl ether, bisphenol-S-diglycidyl ether, bisphenol-P-diglycidyl ether, bisphenol-PH-diglycidyl ether, bisphenol-TMC-diglycidyl ether, bisphenol-Z-diglycidyl ether, dinitrobisphenol-A-diglycidyl ether, tetrabromobisphenol-A-diglycidyl ether and combinations thereof.

### Component b)

The curable oligomer of the invention is derived from the reaction of one or more unsaturated carboxylic acids. The one or more unsaturated carboxylic acids used to obtain the curable oligomer are herein referred to as component b).

As used herein, the term "unsaturated carboxylic acid" means a compound bearing at least one ethylenic unsaturation and at least one carboxylic acid group. As used herein, the term "ethylenic unsaturation" means a polymerizable carbon-carbon double bond. A polymerizable carbon-carbon double bond is a carbon-carbon double bond that can react with another carbon-carbon double bond in a polymerization reaction. A polymerizable carbon-carbon double bond is generally comprised in a group selected from acrylate (including cyanoacrylate), methacrylate, acrylamide, methacrylamide, styrene, maleate, fumarate, itaconate, allyl, propenyl, vinyl and combinations thereof, preferably selected from acrylate, methacrylate and vinyl, more preferably selected from acrylate and methacrylate. The carbon-carbon double bonds of an aromatic ring are not considered as polymerizable carbon-carbon double bonds.

The curable oligomer of the invention is obtained using y1 equivalents of component b).

As used herein, y1 is the number of moles of carboxylic acid groups present in component b). y1 may be obtained by multiplying the number of moles of unsaturated carboxylic acid in component b) by its COOH functionality (i.e. the number of -COOH groups on the unsaturated carboxylic acid). For example, if the oligomer of the invention is obtained using 1 mole of an unsaturated monocarboxylic acid, y1 is equal to 1. If component b) comprises a mixture of unsaturated carboxylic acids, then y1 corresponds to the total number of moles of carboxylic acid groups in the mixture.

Component b) comprises, consists of or consists essentially of at least one unsaturated carboxylic acid.

Component b) may comprise, consist of or consist essentially of at least one unsaturated carboxylic acid bearing at least one unsaturation and one or two carboxylic acid groups.

Component b) may be substantially free of an unsaturated carboxylic acid bearing more than two carboxylic acid groups.

Component b) may be substantially free of an unsaturated carboxylic acid bearing two carboxylic acid groups.

Component b) may comprise, consist of or consist essentially of an unsaturated carboxylic acid bearing one ethylenic unsaturation and one carboxylic acid group.

Component b) may comprise, consist of or consist essentially of at least one α-β ethylenically unsaturated carboxylic acid. As used herein, the term "α-β ethylenically unsaturated carboxylic acid" means a compound having an ethylenic unsaturation in α-β position to the carbonyl carbon of a carboxylic acid group

Component b) may comprise, consist of or consist essentially of at least one compound selected from acrylic acid, methacrylic acid, ethacrylic acid, crotonic acid, isocrotonic acid, angelic acid, tiglic acid, senecioic acid, acryloyloxypropionic acid, maleic acid, fumaric acid, itaconic acid and combinations thereof; in particular acrylic acid, methacrylic acid and combinations thereof.

### Component c)

The curable oligomer of the invention is derived from the reaction of one or more polycarboxylic acids. The one or more polycarboxylic acids used to obtain the curable oligomer are herein referred to as component c).

As used herein, the term "polycarboxylic acid" means a compound bearing at least two carboxylic acid groups.

The polycarboxylic acid(s) of component c) is(are) preferably distinct from the unsaturated carboxylic acid(s) of component b). Accordingly, component c) may be substantially free of a polycarboxylic acid bearing at least one ethylenic unsaturation.

The curable oligomer of the invention is obtained using y2 equivalents of component c).

As used herein, y2 is the number of moles of carboxylic acid groups present in component c). y2 may be obtained by multiplying the number of moles of polycarboxylic acid in component c) by its COOH functionality (i.e. the number of -COOH groups on the polycarboxylic acid). For example, if the oligomer of the invention is obtained using 1 mole of a tricarboxylic acid, y2 is equal to 3. If component c) comprises a mixture of polycarboxylic acids, then y2 corresponds to the total number of moles of carboxylic acid groups in the mixture. For example, if the oligomer of the invention is obtained using 1 mole of a tricarboxylic acid and 1 mole of a tetracarboxylic acid, y2 is equal to 7 (y2 = [1 × 3] + [1 × 4]).

Component c) comprises, consists of or consists essentially of at least one polycarboxylic acid bearing at least three carboxylic acid groups.

Component c) may comprise, consist of, or consist essentially of a mixture of at least one dicarboxylic acid and at least one polycarboxylic acid bearing at least three carboxylic acid groups.

Component c) may be substantially free of a dicarboxylic acid.

Component c) may comprise, consist of, or consist essentially of at least one tricarboxylic acid. As used herein, the term "tricarboxylic acid" means a compound bearing three carboxylic acid groups.

Component c) may comprise, consist of, or consist essentially of at least one polycarboxylic acid bearing at least four carboxylic acid groups.

Component c) may comprise, consist of, or consist essentially of at least one tetracarboxylic acid. As used herein, the term "tetracarboxylic acid" means a compound bearing four carboxylic acid groups.

Component c) may comprise, consist of, or consist essentially of a mixture of at least one tricarboxylic acid and at least one tetracarboxylic acid.

Component c) may comprise, consist of, or consist essentially of at least one compound selected from citric acid; isocitric acid; 1,2,3-propanetricarboxylic acid; 1,2,4-butanetricarboxylic acid; 1,2,3,4-butanetetracarboxylic acid; 1,2,3,4-cyclobutanetetracarboxylic acid; 1,2,3,4-cyclopentanetetracarboxylic acid; 1,3,5-cyclohexanetricarboxylic acid; 1,2,4,5-cyclohexanetetracarboxylic acid; 1,3,5-benzenetricarboxylic acid; 1,2,4-benzenetricarboxylic acid; 1,2,4,5-benzenetetracarboxylic acid; 1,3,5,7-adamantanetetracarboxylic acid; 1,3,5,7-adamantanetetrabenzoic acid; and combinations thereof.

### Relative amounts of a), b) and c)

The inventors have surprisingly found that certain ratios between components a), b) and c) used to form the curable oligomer provide desirable properties in cured compositions that comprise the curable oligomer. These ratios are expressed in terms of the x, y1 and y2 equivalents as defined above.

The ratio of y2:x may be at most 1:4, at most 1:4.5, at most 1:5, at most 1:5.5, at most 1:6, at most 1:6.5, at most 1:7, at most 1:7.5, at most 1:8, at most 1:8.5, at most 1:9, at most 1:9.5, at most 1:10, at most 1:10.5, at most 1:11, at most 1:11.5 or at most 1:12. In one embodiment, the ratio of y2:x may be at most 1:4, in particular at most 1:4.5, more particularly at most 1:5.

The ratio of y2:x may be at least 1:150, at least 1:140, at least 1:130, at least 1:120, at least 1:110, at least 1:100, at least 1:90, at least 1:80, at least 1:70, at least 1:60, at least 1:50, at least 1:40, at least 1:35, at least 1:30, at least 1:25, at least 1:20 or at least 1:15. In one embodiment, the ratio of y2:x may be at least 1:100, in particular at least 1:20, more particularly at least 1:15.

The ratio of y2:x may be from 1:150 to 1:4, from 1:140 to 1:4.5, from 1:130 to 1:5, from 1:120 to 1:5.5, from 1:110 to 1:6, from 1:100 to 1:6.5, from 1:90 to 1:7, from 1:80 to 1:7.5, from 1:70 to 1:8, from 1:60 to 1:8.5, from 1:50 to 1:9, from 1:40 to 1:9.5, from 1:35 to 1:10, from 1:30 to 1:10.5, from 1:25 to 1:11, from 1:20 to 1:11.5 or from 1:15 to 1:12. In one embodiment, the ratio of y2:x may be from 1:100 to 1:4, in particular from 1:20 to 1:4.5, more particularly from 1:15 to 1:5. In another embodiment the ratio of y2:x may be from 1:13 to 1:4, in particular from 1:12 to 1:4.5, more particularly from 1:11 to 1:5. In another embodiment the ratio of y2:x may be from 1:16 to 1:8, in particular from 1:15 to 1:9, more particularly from 1:14 to 1:10.

When a plurality of lower limits and a plurality of upper limits are provided herein with respect to ranges of a variable or ratio, the invention contemplates all ranges from any disclosed lower limit to any disclosed upper limit.

The ratio of x:(y1+y2) may be from 1:1.1 to 1:0.90, in particular from 1:1.09 to 1:0.91, more particularly from 1:1.08 to 1:0.92. In one embodiment, the ratio of x:(y1+y2) may be from 1:1.1 to 1:1, in particular 1:1.09 to 1:1.01. In another embodiment, the ratio of x:(y1+y2) may be from 1:1.1 to 1:1.05, in particular 1:1.09 to 1:1.06. In another embodiment the ratio of x:(y1+y2) may be from 1:1.05 to 1:1, in particular 1:1.04 to 1:1.01. In another embodiment, the ratio of x:(y1+y2) may be from 1:1 to 1:0.90, in particular 1:0.99 to 1:0.91. In another embodiment, the ratio of x:(y1+y2) may be from 1:1 to 1:0.95, in particular 1:0.99 to 1:0.96. In another embodiment, the ratio of x:(y1+y2) may be from 1:0.95 to 1:0.90, in particular 1:0.94 to 1:0.91.

The ratio of y2:y1 may be at most 1:1.5, at most 1:2, at most 1:2.5, at most 1:3, at most 1:3.5, at most 1:4, at most 1:4.5, at most 1:5, at most 1:5.5, at most 1:6, at most 1:6.5, at most 1:7, at most 1:7.5, at most 1:8, at most 1:8.5, at most 1:9, at most 1:9.5, at most 1:10, at most 1:10.5, at most 1:11, at most 1:11.5, at most 1:12, at most 1:12.5 or at most 1:13. In one embodiment, the ratio of y2:y1 may be at most 1:1.5, in particular at most 1:4, more particularly at most 1:6.

The ratio of y2:y1 may be at least 1:150, at least 1:140, at least 1:130, at least 1:120, at least 1:110, at least 1:100, at least 1:90, at least 1:80, at least 1:70, at least 1:60, at least 1:50, at least 1:40, at least 1:35, at least 1:30, at least 1:25, at least 1:20 or at least 1:15. In one embodiment, the ratio of y2:y1 may be at least 1:150, in particular at least 1:100, more particularly at least 1:20.

The ratio of y2:y1 may be from 1:150 to 1:1.5, from 1:140 to 1:2, from 1:130 to 1:2.5, from 1:120 to 1:3, from 1:110 to 1:3.5, from 1:100 to 1:4, from 1:90 to 1:4.5, from 1:80 to 1:5, from 1:70 to 1:5.5, from 1:60 to 1:6, from 1:50 to 1:6.5, from 1:40 to 1:7, from 1:35 to 1:8.5, from 1:30 to 1:9, from 1:25 to 1:9.5, from 1:20 to 1:10 or from 1:15 to 1:10.5. In one embodiment, the ratio of y2:y1 may be from 1:150 to 1:1.5, in particular from 1:100 to 1:4, more particularly from 1:20 to 1:6. In another embodiment the ratio of y2:y1 may be from 1:16 to 1:9, in particular from 1:15 to 1:10, more particularly from 1:14 to 1:11. In another embodiment the ratio of y2:y1 may be from 1:13 to 1:6, in particular from 1:12 to 1:7, more particularly from 1:11 to 1:8.

The curable oligomer is preferably substantially free of epoxy groups. In order for the curable oligomer to be substantially free of epoxy groups, the epoxy groups may be reacted according to methods as known in the art. For example, the epoxy groups of a) may reacted with an acid such that the oligomer is substantially free of epoxy groups. If less than a stoichiometric amount of the carboxylic acids b) and c) are present or if the carboxylic acids b) and c) react too slowly or do not react to completion with the epoxy groups in a), the remaining epoxy groups may be reacted according to methods as known in the art, for example with a strong acid other than acids b) and c). Phosphoric acid is suitable for this purpose.

Component a) may be present as a residue in the curable oligomer at from 50 to 95 wt% based on the weight of the curable oligomer. For example, component a) may be present as a residue in the curable oligomer at from 55 to 90 wt%, from 60 to 85wt%, or from 65 to 80 wt% based on the weight of the curable oligomer.

Component b) may be present as a residue in the curable oligomer at from 10 to 50 wt% based on the weight of the curable oligomer. For example, component b) may be present as a residue in the curable oligomer at from 15 to 45 wt%, from 20 to 40 wt%, or from 20 to 30 wt% based on the weight of the curable oligomer. The amounts may vary depending on the molecular weights and functionalities of the diepoxy a) and the molecular weights and functionalities of the carboxylic acids b) and c).

Component c) may be present as a residue in the curable oligomer at from 0.01 to 10 wt % based on the weight of the curable oligomer. For example, component c) may be present as a residue in the curable oligomer at from 0.5 to 7.5 wt%, from 1 to 5 wt%, or from 1 to 3 wt% based on the weight of the curable oligomer.

If component c) comprises a mixture of polycarboxylic acids, each polycarboxylic acid may be present at these levels. For example, if two polycarboxylic acids are present in component c), they may each be present as residues at from 0.01 to 10 wt%, from 0.5 to 7.5 wt%, from 1 to 5 wt%, or from 1 to 3 wt%, based on the weight of the curable oligomer, but the total amount of polycarboxylic acid should not exceed 10 wt% based on the weight of the curable oligomer. In a preferred embodiment, each polycarboxylic acid may be present as a residue in the curable oligomer at from 0.05 to 1.99 wt% based on the weight of the curable oligomer.

The oligomer of the invention is obtained by the reacting components a), b) and c). The reaction mixture used to obtain the oligomer may be substantially free of dicarboxylic acid, preferably substantially free of components other than components a), b), c), a nonreactive diluent, a catalyst and an inhibitor.

The oligomer is preferably substantially free of residues derived from a dicarboxylic acid. The oligomer preferably consists essentially of or consists of residues derived from the reaction of components a), b) and c).

The total weight of residues derived from the reaction of components a), b) and c) may represent at least 90%, at least 95%, at least 98%, at least 99%, at least 99.5%, at least 99.9%, at least 99.99% or even 100% of the total weight of the oligomer of the invention.

### Curable Composition

The curable composition of the invention comprises the curable oligomer of the invention as defined above, referred to as component i). The curable composition of the invention may further comprise one or more ethylenically unsaturated compounds, referred to as component ii), and/or an inhibitor. The curable composition may further include a photoinitiator.

The curable composition of the invention may comprise:
- from 5 to 95%, from 10 to 90%, from 15 to 85%, from 20 to 80%, from 25 to 75% , from 30 to 70%, from 35 to 65% or from 40 to 60% of component i);
- from 5 to 95%, from 10 to 90%, from 15 to 85%, from 20 to 80%, from 25 to 75% , from 30 to 70%, from 35 to 65% or from 40 to 60% of component ii); the % being % by weight based on the total weight of components i) and ii).

### Ethylenically unsaturated compound

The curable composition of the invention may comprise one or more ethylenically unsaturated compounds, referred to as component ii).

Component ii) may comprise at least one ethylenically unsaturated compound selected from a (meth)acrylate functionalized monomer, a (meth)acrylate functionalized oligomer and mixtures thereof.

As used herein, the term "(meth)acrylate-functionalized monomer" means a monomer comprising a (meth)acrylate group, in particular an acrylate group. The term "(meth)acrylate-functionalized oligomer" means an oligomer comprising a (meth)acrylate group, in particular an acrylate group. The term "(meth)acrylate group" encompasses acrylate groups (-O-CO-CH=CH₂) and methacrylate groups (-O-CO-C(CH₃)=CH₂).

Component ii) may comprise at least one (meth)acrylate-functionalized monomer.

The (meth)acrylate-functionalized monomer may have a molecular weight of less than 600 g/mol, in particular from 100 to 550 g/mol, more particularly 200 to 500 g/mol.

The (meth)acrylate-functionalized monomer may have 1 to 6 (meth)acrylate groups, in particular 1 to 4 (meth)acrylate groups.

The (meth)acrylate-functionalized monomer may comprise a mixture of (meth)acrylate-functionalized monomers having different functionalities. For example the (meth)acrylate-functionalized monomer may comprise a mixture of a (meth)acrylate-functionalized monomer containing a single acrylate or methacrylate group per molecule (referred to herein as "mono(meth)acrylate-functionalized compounds") and a (meth)acrylate-functionalized monomer containing 2 or more, preferably 2 or 3, acrylate and/or methacrylate groups per molecule.

Component i) may comprise at least one mono(meth)acrylate-functionalized monomer. The mono(meth)acrylate-functionalized monomer may advantageously function as a reactive diluent and reduce the viscosity of the composition of the invention.

Examples of suitable mono(meth)acrylate-functionalized monomers include, but are not limited to, mono-(meth)acrylate esters of aliphatic alcohols (wherein the aliphatic alcohol may be straight chain, branched or alicyclic and may be a mono-alcohol, a di-alcohol or a polyalcohol, provided only one hydroxyl group is esterified with (meth)acrylic acid); mono-(meth)acrylate esters of aromatic alcohols (such as phenols, including alkylated phenols); mono-(meth)acrylate esters of alkylaryl alcohols (such as benzyl alcohol); mono-(meth)acrylate esters of oligomeric and polymeric glycols such as diethylene glycol, triethylene glycol, dipropylene glycol, tripropylene glycol, polyethylene glycol, and polypropylene glycol); mono-(meth)acrylate esters of monoalkyl ethers of glycols and oligoglycols; mono-(meth)acrylate esters of alkoxylated (e.g., ethoxylated and/or propoxylated) aliphatic alcohols (wherein the aliphatic alcohol may be straight chain, branched or alicyclic and may be a mono-alcohol, a di-alcohol or a polyalcohol, provided only one hydroxyl group of the alkoxylated aliphatic alcohol is esterified with (meth)acrylic acid); mono-(meth)acrylate esters of alkoxylated (e.g., ethoxylated and/or propoxylated) aromatic alcohols (such as alkoxylated phenols); caprolactone mono(meth)acrylates; and the like.

The following compounds are specific examples of mono(meth)acrylate-functionalized monomers suitable for use in the curable compositions of the present invention: methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate; lauryl (meth)acrylate; 2-phenoxyethyl (meth)acrylate; alkoxylated phenol (meth)acrylates; alkoxylated nonylphenol (meth)acrylates; cyclic trimethylolpropane formal (meth)acrylate; isobornyl (meth)acrylate; tricyclodecanemethanol (meth)acrylate; tert-butylcyclohexanol (meth)acrylate; trimethylcyclohexanol (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; hydroxyl ethyl-butyl urethane (meth)acrylates; 3-(2-hydroxyalkyl)oxazolidinone (meth)acrylates; and combinations thereof.

Component ii) may comprise at least one (meth)acrylate-functionalized monomer containing two or more (meth)acrylate groups per molecule.

Examples of suitable (meth)acrylate-functionalized monomers containing two or more (meth)acrylate groups per molecule include acrylate and methacrylate esters of polyhydric alcohols (organic compounds containing two or more, e.g., 2 to 6, hydroxyl groups per molecule). Specific examples of suitable polyhydric alcohols include C₂₋₂₀ alkylene glycols (glycols having a C₂₋₁₀ alkylene group may be preferred, in which the carbon chain may be branched; e.g., ethylene glycol, trimethylene glycol, 1,2-propylene glycol, 1,2-butanediol, 1,3-butanediol, 2,3-butanediol, tetramethylene glycol (1,4-butanediol), 1,5-pentanediol, 1,6-hexanediol, 1,8-octanediol, 1,9-nonanediol, 1,12-dodecanediol, cyclohexane-1,4-dimethanol, bisphenols, and hydrogenated bisphenols, as well as alkoxylated (e.g., ethoxylated and/or propoxylated) derivatives thereof), diethylene glycol, glycerin, alkoxylated glycerin, triethylene glycol, dipropylene glycol, tripropylene glycol, trimethylolpropane, alkoxylated trimethylolpropane, ditrimethylolpropane, alkoxylated ditrimethylolpropane, pentaerythritol, alkoxylated pentaerythritol, dipentaerythritol, alkoxylated dipentaerythritol, cyclohexanediol, alkoxylated cyclohexanediol, cyclohexanedimethanol, alkoxylated cyclohexanedimethanol, norbornene dimethanol, alkoxylated norbornene dimethanol, norbornane dimethanol, alkoxylated norbornane dimethanol, polyols containing an aromatic ring, cyclohexane-1,4-dimethanol ethylene oxide adducts, bis-phenol ethylene oxide adducts, hydrogenated bisphenol ethylene oxide adducts, bisphenol propylene oxide adducts, hydrogenated bisphenol propylene oxide adducts, cyclohexane-1,4-dimethanol propylene oxide adducts, sugar alcohols and alkoxylated sugar alcohols. Such polyhydric alcohols may be fully or partially esterified (with (meth)acrylic acid, (meth)acrylic anhydride, (meth)acryloyl chloride or the like), provided they contain at least two (meth)acrylate functional groups per molecule.

Exemplary (meth)acrylate-functionalized monomers containing two or more (meth)acrylate groups per molecule may include ethoxylated bisphenol A di(meth)acrylates; triethylene glycol di(meth)acrylate; ethylene glycol di(meth)acrylate; tetraethylene glycol di(meth)acrylate; polyethylene glycol di(meth)acrylates; 1,4-butanediol diacrylate; 1,4-butanediol dimethacrylate; diethylene glycol diacrylate; diethylene glycol dimethacrylate, 1,6-hexanediol diacrylate; 1,6-hexanediol dimethacrylate; neopentyl glycol diacrylate; neopentyl glycol di(meth)acrylate; polyethylene glycol (600) dimethacrylate (where 600 refers to the approximate number average molecular weight of the polyethylene glycol portion); polyethylene glycol (200) diacrylate; 1,12-dodecanediol dimethacrylate; tetraethylene glycol diacrylate; triethylene glycol diacrylate, 1,3-butylene glycol dimethacrylate, tripropylene glycol diacrylate, polybutadiene diacrylate; methyl pentanediol diacrylate; polyethylene glycol (400) diacrylate; ethoxylated₂ bisphenol A dimethacrylate; ethoxylated₃ bisphenol A dimethacrylate; ethoxylated₃ bisphenol A diacrylate; cyclohexane dimethanol dimethacrylate; cyclohexane dimethanol diacrylate; ethoxylated₁₀ bisphenol A dimethacrylate (where the numeral following "ethoxylated" is the average number of oxyalkylene moieties per molecule); dipropylene glycol diacrylate; ethoxylated₄ bisphenol A dimethacrylate; ethoxylated₆ bisphenol A dimethacrylate; ethoxylated₈ bisphenol A dimethacrylate; alkoxylated hexanediol diacrylates; alkoxylated cyclohexane dimethanol diacrylate; dodecane diacrylate; ethoxylated₄ bisphenol A diacrylate; ethoxylated₁₀ bisphenol A diacrylate; polyethylene glycol (400) dimethacrylate; polypropylene glycol (400) dimethacrylate; metallic diacrylates; modified metallic diacrylates; metallic dimethacrylates; polyethylene glycol (1000) dimethacrylate; methacrylated polybutadiene; propoxylated₂ neopentyl glycol diacrylate; ethoxylated₃₀ bisphenol A dimethacrylate; ethoxylated₃₀ bisphenol A diacrylate; alkoxylated neopentyl glycol diacrylates; polyethylene glycol dimethacrylates; 1,3-butylene glycol diacrylate; ethoxylated₂ bisphenol A dimethacrylate; dipropylene glycol diacrylate; ethoxylated₄ bisphenol A diacrylate; polyethylene glycol (600) diacrylate; polyethylene glycol (1000) dimethacrylate; tricyclodecane dimethanol diacrylate; propoxylated neopentyl glycol diacrylates such as propoxylated₂ neopentyl glycol diacrylate; diacrylates of alkoxylated aliphatic alcohols; trimethylolpropane trimethacrylate; trimethylolpropane triacrylate; tris (2-hydroxyethyl) isocyanurate triacrylate; ethoxylated₂₀ trimethylolpropane triacrylate; pentaerythritol triacrylate; ethoxylated₃ trimethylolpropane triacrylate; propoxylated₃ trimethylolpropane triacrylate; ethoxylated₆ trimethylolpropane triacrylate; propoxylated₆ trimethylolpropane triacrylate; ethoxylated₉ trimethylolpropane triacrylate; alkoxylated trifunctional acrylate esters; trifunctional methacrylate esters; trifunctional acrylate esters; propoxylated₃ glyceryl triacrylate; propoxylated_{5.5} glyceryl triacrylate; ethoxylated₁₅ trimethylolpropane triacrylate; trifunctional phosphoric acid esters; trifunctional acrylic acid esters; pentaerythritol tetraacrylate; di-trimethylolpropane tetraacrylate; ethoxylated₄ pentaerythritol tetraacrylate; pentaerythritol polyoxyethylene tetraacrylate; dipentaerythritol pentaacrylate; and pentaacrylate esters.

Component i) may comprise at least one (meth)acrylate-functionalized oligomer.

The (meth)acrylate-functionalized oligomer may be selected in order to enhance the flexibility, strength and/or modulus, among other attributes, of a cured polymer prepared using the curable composition of the present invention.

The (meth)acrylate functionalized oligomer may have 1 to 18 (meth)acrylate groups, in particular 2 to 6 (meth)acrylate groups, more particularly 2 to 6 acrylate groups.

The (meth)acrylate functionalized oligomer may have a number average molecular weight equal or more than 600 g/mol, in particular 800 to 15,000 g/mol, more particularly 1,000 to 5,000 g/mol.

In particular, the (meth)acrylate-functionalized oligomers may be selected from the group consisting of (meth)acrylate-functionalized urethane oligomers (sometimes also referred to as "urethane (meth)acrylate oligomers," "polyurethane (meth)acrylate oligomers" or "carbamate (meth)acrylate oligomers"), (meth)acrylate-functionalized epoxy oligomers (sometimes also referred to as "epoxy (meth)acrylate oligomers"), (meth)acrylate-functionalized polyether oligomers (sometimes also referred to as "polyether (meth)acrylate oligomers"), (meth)acrylate-functionalized polydiene oligomers (sometimes also referred to as "polydiene (meth)acrylate oligomers"), (meth)acrylate-functionalized polycarbonate oligomers (sometimes also referred to as "polycarbonate (meth)acrylate oligomers"), and (meth)acrylate-functionalized polyester oligomers (sometimes also referred to as "polyester (meth)acrylate oligomers") and mixtures thereof.

Exemplary polyester (meth)acrylate oligomers include the reaction products of acrylic or methacrylic acid or mixtures or synthetic equivalents thereof with hydroxyl group-terminated polyester polyols. The reaction process may be conducted such that all or essentially all of the hydroxyl groups of the polyester polyol have been (meth)acrylated, particularly in cases where the polyester polyol is difunctional. The polyester polyols can be made by polycondensation reactions of polyhydroxyl functional components (in particular, diols) and polycarboxylic acid functional compounds (in particular, dicarboxylic acids and anhydrides). The polyhydroxyl functional and polycarboxylic acid functional components can each have linear, branched, cycloaliphatic or aromatic structures and can be used individually or as mixtures.

Examples of suitable epoxy (meth)acrylates include the reaction products of acrylic or methacrylic acid or mixtures thereof with an epoxy resin (polyglycidyl ether or ester). The epoxy resin may, in particular, by selected from bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-1,4-dioxane, bis(3,4-epoxycyclohexylmethyl)adipate, vinylcyclohexene oxide, 4-vinylepoxycyclohexane, bis(3,4-epoxy-6-methylcyclohexylmethyl)adipate,3,4-epoxy-6-methylcyclohexy 1-3',4'-epoxy-6'-methylcyclohexanecarboxylate, methylenebis(3,4-epoxycyclohexane), dicyclopentadiene diepoxide, di(3,4-epoxycyclohexylmethyl) ether of ethylene glycol, ethylenebis(3, 4-epoxycyclohexanecarboxylate), 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, polyglycidyl ethers of a polyether polyol obtained by the addition of one or more alkylene oxides to an aliphatic polyhydric alcohol such as ethylene glycol, propylene glycol, and glycerol, diglycidyl esters of aliphatic long-chain dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, epoxidized soybean oil, epoxybutylstearic acid, epoxyoctylstearic acid, epoxidized linseed oil, epoxidized polybutadiene, and the like.

Suitable polyether (meth)acrylate oligomers include, but are not limited to, the condensation reaction products of acrylic or methacrylic acid or synthetic equivalents or mixtures thereof with polyetherols which are polyether polyols (such as polyethylene glycol, polypropylene glycol or polytetramethylene glycol). Suitable polyetherols can be linear or branched substances containing ether bonds and terminal hydroxyl groups. Polyetherols can be prepared by ring opening polymerization of cyclic ethers such as tetrahydrofuran or alkylene oxides (e.g., ethylene oxide and/or propylene oxide) with a starter molecule. Suitable starter molecules include water, polyhydroxyl functional materials, polyester polyols and amines.

Polyurethane (meth)acrylate oligomers (sometimes also referred to as "urethane (meth)acrylate oligomers") suitable for use in the curable compositions of the present invention include urethanes based on aliphatic, cycloaliphatic and/or aromatic polyester polyols and polyether polyols and aliphatic, cycloalipahtic and/or aromatic polyester diisocyanates and polyether diisocyanates capped with (meth)acrylate end-groups. Suitable polyurethane (meth)acrylate oligomers include, for example, aliphatic polyester-based urethane di- and tetra-acrylate oligomers, aliphatic polyether-based urethane di- and tetra-acrylate oligomers, as well as aliphatic polyester/polyether-based urethane di- and tetra-acrylate oligomers.

The polyurethane (meth)acrylate oligomers may be prepared by reacting aliphatic, cycloaliphatic and/or aromatic polyisocyanates (e.g., diisocyanate, triisocyanate) with OH group terminated polyester polyols, polyether polyols, polycarbonate polyols, polycaprolactone polyols, polyorganosiloxane polyols (e.g., polydimethylsiloxane polyols), or polydiene polyols (e.g., polybutadiene polyols), or combinations thereof to form isocyanate-functionalized oligomers which are then reacted with hydroxyl-functionalized (meth)acrylates such as hydroxyethyl acrylate or hydroxyethyl methacrylate to provide terminal (meth)acrylate groups. For example, the polyurethane (meth)acrylate oligomers may contain two, three, four or more (meth)acrylate functional groups per molecule. Other orders of addition may also be practiced to prepare the polyurethane (meth)acrylate, as is known in the art. For example, the hydroxyl-functionalized (meth)acrylate may be first reacted with a polyisocyanate to obtain an isocyanate-functionalized (meth)acrylate, which may then be reacted with an OH group terminated polyester polyol, polyether polyol, polycarbonate polyol, polycaprolactone polyol, polydimethylsiloxane polyol, polybutadiene polyol, or a combination thereof. In yet another embodiment, a polyisocyanate may be first reacted with a polyol, including any of the aforementioned types of polyols, to obtain an isocyanate-functionalized polyol, which is thereafter reacted with a hydroxyl-functionalized (meth)acrylate to yield a polyurethane (meth)acrylate. Alternatively, all the components may be combined and reacted at the same time.

Suitable acrylic (meth)acrylate oligomers (sometimes also referred to in the art as "acrylic oligomers") include oligomers which may be described as substances having an oligomeric acrylic backbone which is functionalized with one or (meth)acrylate groups (which may be at a terminus of the oligomer or pendant to the acrylic backbone). The acrylic backbone may be a homopolymer, random copolymer or block copolymer comprised of repeating units of acrylic monomers. The acrylic monomers may be any monomeric (meth)acrylate such as C1-C6 alkyl (meth)acrylates as well as functionalized (meth)acrylates such as (meth)acrylates bearing hydroxyl, carboxylic acid and/or epoxy groups. Acrylic (meth)acrylate oligomers may be prepared using any procedures known in the art, such as by oligomerizing monomers, at least a portion of which are functionalized with hydroxyl, carboxylic acid and/or epoxy groups (e.g., hydroxyalkyl(meth)acrylates, (meth)acrylic acid, glycidyl (meth)acrylate) to obtain a functionalized oligomer intermediate, which is then reacted with one or more (meth)acrylate-containing reactants to introduce the desired (meth)acrylate functional groups.

### Inhibitor

The curable composition of the invention may comprise at least one inhibitor.

Inhibitors may be introduced in the curable composition in order to provide adequate storage stability and shelf life. Further, inhibitors may be used during the preparation of the curable composition, to protect against unwanted reactions during processing of the ethylenically unsaturated components of the curable composition. An inhibitor may be a compound or substance which retards or prevents reaction or curing of actinically-polymerizable functional groups present in a composition in the absence of actinic radiation. However, it will be advantageous to select an amount and type of inhibitor such that the composition remains capable of being cured when exposed to actinic radiation (that is, the inhibitor does not prevent radiation curing of the composition). The inhibitor may, in particular be a free radical inhibitor (i.e. a inhibitor which functions by inhibiting free radical reactions).

Any of the inhibitors known in the art related to (meth)acrylate-functionalized compounds may be utilized in the present invention. Quinones represent a particularly preferred type of inhibitor which can be employed in the context of the present invention. As used herein, the term "quinone" includes both quinones and hydroquinones as well as ethers thereof such as monoalkyl, monoaryl, monoaralkyl and bis(hydroxyalkyl) ethers of hydroquinones. Hydroquinone monomethyl ether is an example of a suitable inhibitor which can be utilized. Other inhibitors known in the art such as hydroquinone (HQ), 4-tert-butylcatechol (TBC), 3,5-di-tertiobutyl-4-hydroxytoluene (BHT), phenothiazine (PTZ), pyrogallol, phosphite compounds, triphenyl antimony and tin(II) salts.

The concentration of inhibitor in the curable composition will vary depending upon the particular inhibitor or combination of inhibitor selected for use and also on the degree of inhibition desired and the susceptibility of components in the curable compositions towards degradation in the absence of inhibitor. Typically, however, the curable composition is formulated to comprise from 5 to 5000 ppm inhibitor based on the total amount of polymerizable compounds in the curable composition. According to certain embodiments of the invention, the reaction mixture during each stage of the method employed to make the curable composition contains at least some inhibitor, e.g., at least 10 ppm inhibitor.

### Photoinitiator

The curable composition of the invention may comprise at least one photoinitiator.

The photoinitiator may be a radical photoinitiator, in particular a radical photoinitiator having Norrish type I activity and/or Norrish type II activity, more particularly a radical photoinitiator having Norrish type I activity.

Non-limiting types of radical photoinitiators suitable for use in the curable compositions of the present invention include, for example, benzoins, benzoin ethers, acetophenones, α-hydroxy acetophenones, benzyl, benzyl ketals, anthraquinones, phosphine oxides, acylphosphine oxides, α-hydroxyketones, phenylglyoxylates, α-aminoketones, benzophenones, thioxanthones, xanthones, acridine derivatives, phenazene derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof.

Examples of suitable radical photoinitiators include, but are not limited to, 2-methylanthraquinone, 2-ethylanthraquinone, 2-chloroanthraquinone, 2-benzyanthraquinone, 2-t-butylanthraquinone, 1,2-benzo-9,10-anthraquinone, benzyl, benzoins, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, diethyloxyacetophenone, 2-isopropylthioxanthone, thioxanthone, diethyl thioxanthone, 1,5-acetonaphthylene, benzil ketone, α-hydroxy keto, 2,4,6-trimethylbenzoyldiphenyl phosphine oxide, benzyl dimethyl ketal, 2,2-dimethoxy-1,2-diphenylethanone, 1-hydroxycylclohexyl phenyl ketone, 2-methyl-1-[4-(methylthio) phenyl]-2-morpholinopropanone-1, 2-hydroxy-2-methyl-1-phenyl-propanone, oligomeric α-hydroxy ketone, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid, sodium salt monohydrate, (benzene) tricarbonylchromium, benzil, benzoin isobutyl ether, benzophenone/1-hydroxycyclohexyl phenyl ketone, 50/50 blend, 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone, 50/50 blend, 4'-ethoxyacetophenone, 2,4,6-trimethylbenzoyldiphenylphophine oxide, phenyl bis(2,4,6-trimethyl benzoyl)phosphine oxide, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methybenzoylformate, 2-methyl-4'-(methylthio)-2-morpholinopropiophenone, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, thioxanthen-9-one and combinations thereof.

In particular, the photoinitiator may be a benzophenone (such as Speedcure^{®} BP, Speedcure^{®} 7005, Speedcure^{®} 7006), a thioxanthone (such as Speedcure^{®} 7010, Speedcure^{®} ITX), an α-hydroxy acetophenone, an acylphosphine oxide (such as Speedcure^{®} BPO, Speedcure^{®} TPO, Speedcure^{®} TPO-L).

The amount of photoinitiator in the curable composition may be varied as may be appropriate depending on the photoinitiator(s) selected, the amounts and types of polymerizable compounds that are intended to be photopolymerized, the radiation source and the radiation conditions used, among other factors. Typically, however, the curable composition comprises 0.5 to 25%, in particular 1 to 20%, more particularly 1.5 to 15%, even more particularly 2 to 10%, of photoinitiator based on the total weight of the polymerizable compounds in the curable composition.

### Additives

Other additives that may be present in a curable composition include, but are not limited to, UV cure catalysts, antioxidants, ultraviolet absorbers, foam inhibitors, flow or leveling agents, colorants, pigments, dispersants (wetting agents), slip additives, fillers, thixotropic agents, matting agents, thermoplastics such as acrylic resins that do not contain any free radical-polymerizable functional groups, waxes or other various additives, including any of the additives conventionally utilized in the coating, sealant, adhesive, molding or ink arts.

### Methods

Also provided are methods of preparing the inventive curable oligomer. According to an embodiment, a method comprises, consists of or consists essentially of reacting a mixture comprising, consisting of or consisting essentially of the following:
- x equivalents of a component a) comprising at least one diepoxy;
- y2 equivalents of a component c) comprising at least one polycarboxylic acid bearing at least three carboxylic acid groups; and
- optionally z1 equivalents of a component b) comprising at least one unsaturated carboxylic acid;
to provide an epoxy-capped pre-polymer.

The epoxy-capped prepolymer is then reacted with z2 equivalents of a component b) comprising at least one unsaturated carboxylic acid b) to provide the curable oligomer.

The sum z1+z2 = y1. If part of component b) is added in the step of obtaining the epoxy-capped pre-polymer, the ratio z1/z2 may be from 0.1 to 0.95, or from 0.2 to 0.9, or from 0.5 to 0.7, or from 0.45 to 0.55. If no component b) is added in the step of obtaining the epoxy-capped pre-polymer, then z1 = 0 and y1=z2.

x is defined as the number of moles of epoxy groups in component a), y1 is the number of moles of carboxylic acid groups in component b), and y2 is the number of moles of carboxylic acid groups in component c). The ratio of x:(y1+y2) may be from 1:1.1 to 1:0.90, in particular from 1:1.09 to 1:0.91, more particularly from 1:1.08 to 1:0.92

According to an embodiment, component b) may be added to a reaction mixture comprising, consisting of or consisting essentially of component a) and component c) in one or more additions during the step of obtaining the epoxy-capped pre-polymer and/or during the step of obtaining the curable oligomer.

According to another embodiment, a method of making the curable oligomer is provided. This method comprises, consists of or consists essentially of reacting a mixture comprising, consisting of or consisting essentially of the following:
- x equivalents of a component a) comprising at least one diepoxy;
- y1 equivalents of a component b) comprising at least one unsaturated carboxylic acid; and
- y2 equivalents of a component c) comprising at least one polycarboxylic acid bearing at least three carboxylic acid groups;
to provide the curable oligomer.

x is defined as the number of moles of epoxy groups in component a), y1 is defined as the number of moles of carboxylic acid groups in component b), and y2 is defined as the number of moles of carboxylic acid groups component in c). The ratio of x:(y1+y2) is from 1:1.1 to 1:0.90, in particular from 1:1.09 to 1:0.91, more particularly from 1:1.08 to 1:0.92.

In the methods of the invention, one or both of the following conditions i) and ii) may be achieved:
i) the ratio of y2:x is at most 1:4, in particular at most 1:5, more particularly at most 1:6; and/or
ii) the at least one diepoxy a) comprises at least one of bisphenol-based diglycidyl ether or an aliphatic diepoxy.

### Applications:

These oligomers of the invention may be used alone or in combination with other (meth)acrylate functional oligomers or monomers to form curable overprint varnishes or coatings. Other uses include but are not limited to three dimensional printing, and printer inks. End use applications for the curable compositions comprising the inventive curable oligomers include, but are not limited to, inks, coatings, adhesives, additive manufacturing resins (such as 3D printing resins), molding resins, sealants, composites, antistatic layers, electronic applications, recyclable materials, smart materials capable of detecting and responding to stimuli, and biomedical materials.

Within this specification, embodiments have been described in a way which enables a clear and concise specification to be written, but it is intended and will be appreciated that embodiments may be variously combined or separated without departing from the invention. For example, it will be appreciated that all preferred features described herein are applicable to all aspects of the invention described herein.

In some embodiments, the invention herein can be construed as excluding any element or process step that does not materially affect the basic and novel characteristics of the actinic radiation-curable compositions, methods for making the actinic radiation-curable compositions, methods for using the actinic radiation-curable compositions, and articles prepared from the actinic radiation-curable compositions. Additionally, in some embodiments, the invention can be construed as excluding any element or process step not specified herein.

### EXAMPLES

### Methods:

Sample Preparation:
   Films: 0.2 mm thick films were cured under H-Bulb (mercury vapor) having an intensity of 400 W/in² (400 W/ 4.45cm²) at a cure speed of 50 ft/min. (15.25 m/min.).
   Coatings: 0.2mm thick films on aluminum panels were cured under H-Bulb (mercury vapor) having an intensity of 400 W/in² (400 W/ 4.45cm2) at a cure speed of 50 ft/min. (15.25 m/min.).
Tensile strength in psi (Pa), elongation in %, Young's modulus in psi (Pa), and energy at break in J were measured according to ASTM D882-18 using an Instron tensile testing apparatus.
MEK (methylethylketone) Rub was measured according to ASTM D5402-19.
Konig Hardness was measured according to ASTM D4366-09.
Taber Abrasion after 500 cycles was measured according to ASTM 4060-10 and reported as % difference in grams.
Initial 60 degree gloss was measured according to ASTM D523-08.
Brookfield Viscosity was obtained using a DVII+ Brookfield Viscometer with spindle #27 at a speed to achieve 20-80% of maximum torque.
Gel Permeation Chromatography was used to obtain weight average molecular weight Mw and number average molecular weight Mn using an Agilent 1260 GPC with a refractive index detector and using polystyrene standards for calibration.

### Example 1: Oligomer #1 including 2 wt% citric acid:

1 mole citric acid (2 wt% in loading), 19.446 moles of bisphenol A diglycidyl ether (D.E.R.^{™} 331, Dow), 9.017 moles of acrylic acid (Beantown), 0.15 wt% mequinol (MeHQ) (Aldrich) as inhibitor and 0.35 wt% benzyltriethylammonium chloride (BTEAC) (Aldrich) as catalyst were mixed well and heated to 90°C under air sparge. The remaining 25.380 moles of acrylic acid was metered into the mixture over 1 hour and the exothermic temperature was controlled at below 125°C. The reaction was then run at 125°C until shut down criteria were reached at acid value (AV) < 2 mg KOH/gm and epoxy value (EV) < 5 mg KOH/gm (about 6 hours).The AV and EV were adjusted by adding 1.128 moles of acrylic acid. The final product was a clear, pale yellow, viscous liquid having a Brookfield viscosity of 8096 mPa·s (cP) at 65°C.

The ratio x:(y1+y2) was 1:0.99

The ratio y2:x was 1:12.96

The results show that 2 wt% citric acid in loading provided 13% branched epoxy acrylate by weight and 6% branching by moles. The increased viscosity indicated that branched molecules were present.

### Example 2: Oligomer #2 including 2 wt% 1,2,3,4 butane tetracarboxylic acid:

1 mole 1,2,3,4-butanetetracarboxylic acid (2 wt% in loading) (Aldrich), 22.982 moles of bisphenol A diglycidyl ether, 12.586 moles of acrylic acid, 0.15 wt% MeHQ as inhibitor and 0.35 wt% BTEAC as catalyst were mixed well and heated to 90°C under air sparge. The remaining 31.582 moles of acrylic acid was metered into the mixture over 1 hour and the exothermic temperature was controlled at below 125°C. The reaction was then run at 125°C until shut down criteria were reached at AV < 2 mg KOH/gm and EV < 5 mg KOH/gm (about 6 hours). AV and EV were adjusted by adding 0.785 moles of acrylic acid. The final product was a clear, pale yellow, viscous liquid having Brookfield viscosity of 7237 mPa·s (cP) at 65°C.

The ratio x:(y1+y2) was 1:1.065

The ratio y2:x was 1:11.49

The results for Example 2 show that 2 wt% citric acid and 2 wt% 1,2,3,4-butanetetracarboxylic acid in loading created 17% branched epoxy acrylate by weight and 5% by mole. The high Brookfield viscosity of 7237 mPa·s at 65°C also confirmed that branching was produced. Gel permeation chromatography with polystyrene standards showed number average molecular weight Mn of 2229 g/mol and weight average molecular weight Mw of 2625 g/mol.

### Example 3: Oligomer #3 with 2 wt% citric acid and 2 wt% 1,2,3,4-butanetetracarboxylic acid:

1.219 mole citric acid (2 wt% in loading), 1 mole 1,2,3,4-butanetetracarboxylic acid (2 wt% in loading), 23.107 moles of bisphenol A diglycidyl ether, 11.524 moles of acrylic acid, 0.15 wt% MeHQ as inhibitor and 0.35 wt% BTEAC as catalyst were mixed well and heated to 90°C under air sparge. The remaining 27.735 moles of acrylic acid was metered into the mixture over 1 hour and the exothermic temperature was controlled at below 125°C. The reaction was then run until shut down criteria were reached at AV < 2 mg KOH/gm and EV < 5 mg KOH/gm (about 6 hours). Final product was a clear, pale yellow, viscous liquid of 22660 mPa·s (cP) at 65°C.

The ratio x:(y1+y2) was 1:1.015

The ratio y2:x was 1:6.04

The Brookfield viscosity of the sample was 22,660 mPa·s at 65°C and 7375 mPa·s at 75°C, indicating that branched molecules were produced. Gel permeation chromatography using polystyrene standards showed Mn of 2406 g/mol, and Mw of 3486 g/mol.

### Comparative Example 1: Neat reaction using the two step process, 1:3 ratio of citric acid to acrylic acid.

1 mole citric acid, 3 moles of bisphenol A diglycidyl ether (D.E.R.^{™} 331, Dow) and 0.7% mequinol (MeHQ) (Aldrich) as inhibitor were mixed well and heated to 90°C under air sparge. 0.35% wt.% benzyltriethylammonium chloride (BTEAC) (Aldrich) as catalyst was added at 90°C and exothermic temperature was allowed to reach 120°C. The mixture was agitated at 120°C for 30 minutes until most citric acid disappeared. 3 moles of acrylic acid were then metered into the mixture over 30 minutes and the exothermic temperature was controlled at below 125°C. The mixture was continued to be agitated at 125°C after all the acrylic acid was added. The viscosity of the mixture kept increasing, and then the mixture coagulated into a lump half an hour later, before shut down criteria were reached. The material was not soluble in THF. This indicated that it had too much crosslinking.

The ratio x:(y1+y2) was 1:1

The ratio y2:x was 1:2

### Comparative Example 2: One step process in toluene as solvent, 1:3 molar ratio of citric acid to acrylic acid.

1 mole citric acid, 3 moles of bisphenol A diglycidyl ether (D.E.R.^{™} 331, Dow), 3 moles of acrylic acid, 0.3% mequinol (MeHQ) (Aldrich) as inhibitor and 40 wt% toluene (SECO) as solvent to cut the viscosity were mixed well and heated to 90°C under air sparge. 0.4% wt.% benzyltriethylammonium chloride (BTEAC) (Aldrich) as catalyst was added at 90°C and allowed exothermic temperature to reach 120°C. 15 minutes after all citric acid disappeared, high viscosity material crashed out (phase separation from the solvent). This high viscosity material was not soluble in THF thus indicated it had too high level of crosslinking.

The ratio x:(y1+y2) was 1:1

The ratio y2:x was 1:2

### Comparative Example 3: Fully branched 1,4 butanediol diglycidyl ether epoxy acrylate with 10.28 wt% citric acid in 40% toluene.

Citric acid (0.118 mol), 1,4-butanediol diglycidyl ether (0.353 mol) and acrylic acid (0.353 mol) in toluene (88.03 gm) as solvent were reacted together according to the procedure of Comparative Example 1, with triphenylphosphine as catalyst. The resulting product was an unusable, non-viscous mass and could not be formed into a coating or film.

The ratio x:(y1+y2) was 1:1.001

The ratio y2:x was 1:1.994

### Example 4: Properties

Application testing was conducted on cured film samples for the tensile properties and on cured coatings for the other property testing. Comparative samples were made using a difunctional bisphenol-A based epoxy acrylate that does not include branching (*i*.*e*., it was obtained with a dicarboxylic acid and not a polycarboxylic acid bearing at least 3 carboxylic acid groups).

The tensile properties of the cured films are shown below as blends of 48% oligomer, 48% difunctional monomer polyethylene glycol (600) dimethacrylate (SR252, Sartomer), and 4% photoinitiator (PL 460, PL Industries) by weight which were cured by UV radiation cured prior to performing the tests. The data shows an increase of elasticity of the newly prepared oligomers Examples 1, 2, and 3. This phenomenon shows an increase in toughness as shown by the increase of energy at break as seen in Table 1.

The film tensile properties are shown in Table 1.

| Table 1: Properties of cured films | | | | |
|---|---|---|---|---|
| Oligomer used in sample | Tensile strength, psi | Elongation % | Young's modulus, psi | Energy at break, J |
| Comparative | 2150±347 | 23±8 | 26,569±6390 | 0.117 |
| Example 1 | 2492±206 | 38±3.7 | 15,447±3092 | 0.2129 |
| Example 2 | 2202±97 | 39±1 | 15,432±684 | 0.1840 |
| Example 3 | 3456±413 | 37±3 | 46,226±1429 | 0.191 |

The coatings were made by blending the synthesized oligomers from Example 1, 2, and 3 at 57.6% by weight oligomer, 38.4% by weight of tripropylene glycol diacrylate (SR306F, Sartomer), and 4% by weight photiniator (SpeedCure 73; hydroxyacetophenone type, Lambson) applied to aluminum panels and cured with ultraviolet radiation. A series of testing on these coatings was performed and the results are shown in Table 2.

| Table 2: Properties of cured coatings | | | | |
|---|---|---|---|---|
| Oligomer used in sample | MEK Rub | Konig Hardness Average | Taber Abrasion after 500 cycles % diff in grams | Initial 60 degree gloss |
| Comparative | 200+ | 94 | 0.07 | 122 |
| Example 1 | 200+ | 127 | 0.04 | 164 |
| Example 2 | 200+ | 101 | 0.08 | 155 |
| Example 3 | 200+ | 129 | 0.04 | 132 |

### Example 5: Aliphatic diepoxy with 2 wt% citric acid and 2 wt% 1,2,3,4-butanetetracarboxylic acid.

Citric acid (0.0328 mol), 1,2,3,4-butanetetracarboxylic acid (0.0269 mol), 0.15 wt% MeHQ as inhibitor, 0.20 wt% Irgafos 126 and 1,4-butanediol diglycidyl ether (0.842 mol) were loaded into a 1 L 4-neck round bottom flask equipped with air sparge, agitator, thermocouple, temperature controller, heating mantle, side arm / condenser and addition funnel. The mixture was heated to 80°C and then acrylic acid (1.4266 mol) was fed into the reaction mixture through an addition funnel over the course of 1 hour. Triphenylphosphine as catalyst (0.8 wt%) was added simultaneously with the acrylic acid. During the acrylic acid feeding step, the reaction was maintained at less than 115°C. The reaction was then run at 115°C until shut down criteria were reached at AV < 2 mg KOH/gm and EV < 5 mg KOH/gm (about 2 hours). AV and EV were adjusted by adding 0.0344 moles of 1,4-butanediol diglycidyl ether. The Brookfield viscosity of the product was 2945 mPa.s at 25°C and 215 mPa.s at 60°C. The GPC showed Mn = 1512 gm/mol, Mw = 2037gm/mol. This material was easily formed into cured coatings and films.

The ratio x:(y1+y2) was 1:0.932

The ratio y2:x was 1:8.51

The tensile properties of the cured films made from the oligomer of Example 5 are shown below in Table 3 as blends of 96% Example 5 oligomer and 4% photoinitiator (PL 460, PL Industries) by weight which were cured by UV radiation cured prior to performing the tensile tests. The film tensile properties are shown in Table 3.

| Table 3: Properties of cured films | | | | |
|---|---|---|---|---|
| Oligomer used in sample | Tensile strength, psi | Elongation % | Young's modulus, psi | Energy at break, J |
| Example 5 | 1,130±198 | 15.5±2 | 8,682±1,502 | 0.0138 |

These results show that the branched oligomers from Examples 1, 2, 3 and 5 provided cured films and coatings with improved properties compared to the non-branched comparative example in Table 2. The inventive samples also were formable into films and coatings, as compared to the comparative examples 1, 2 and 3 which were unusable.

### Prophetic Example 1: Molecule including 0.2 wt% citric acid:

0.1 mole citric acid (0.2 wt% in loading), 19.4 moles of bisphenol A diglycidyl ether (D.E.R.^{™} 331, Dow), 9 moles of acrylic acid (Beantown), 0.15 wt% mequinol (MeHQ) (Aldrich) as inhibitor and 0.35% benzyltriethylammonium chloride (BTEAC) (Aldrich) as catalyst are mixed well and heated to 90°C under air sparge. The remaining 29.5 moles of acrylic acid is metered into the mixture over 1 hour and the exothermic temperature is controlled at below 125°C. The reaction is then run at 125°C until shut down criteria are reached at acid value (AV) < 2 mg KOH/gm and epoxy value (EV) < 5 mg KOH/gm (about 6 hours).The AV or EV are adjusted by adding more acrylic acid or DER 331 as the reaction proceeded as needed. The final product is a clear, pale yellow, viscous liquid.

The ratio x:(y1+y2) was 1:1

The ratio y2:x was 1:129.3

### Prophetic Example 2: Molecule including 4 wt% citric acid:

2 moles citric acid (4 wt% in loading), 19.4 moles of bisphenol A diglycidyl ether (D.E.R.^{™} 331, Dow), 9 moles of acrylic acid (Beantown), 0.15 wt% mequinol (MeHQ) (Aldrich) as inhibitor and 0.35 wt% benzyltriethylammonium chloride (BTEAC) (Aldrich) as catalyst are mixed well and heated to 90°C under air sparge. The remaining 23.8 moles of acrylic acid are metered into the mixture over 1 hour and the exothermic temperature is controlled at below 125°C. The reaction is then run at 125°C until shut down criteria are reached at acid value (AV) < 2 mg KOH/gm and epoxy value (EV) < 5 mg KOH/gm (about 6 hours).The AV or EV are adjusted by adding more acrylic acid or DER 331 as the reaction proceeded as needed. The final product is a clear, pale yellow, viscous liquid.

The ratio x:(y1+y2) was 1:1

The ratio y2:x was 1:6.47

## Claims

1. A curable oligomer comprising the reaction product of:
- x equivalents of a component a) comprising at least one diepoxy;
- y1 equivalents of a component b) comprising at least one unsaturated carboxylic acid; and
- y2 equivalents of a component c) comprising at least one polycarboxylic acid bearing at least three carboxylic acid groups;
wherein x is the number of moles of epoxy groups in component a), y1 is the number of moles of carboxylic acid groups in component b), and y2 is the number of moles of carboxylic acid groups in component c); and
the ratio of x:(y1+y2) is from 1:1.1 to 1:0.90, in particular from 1:1.09 to 1:0.91, more particularly from 1:1.08 to 1:0.92.

2. The curable oligomer of claim 1, wherein the ratio of y2:x is at most 1:4, in particular at most 1:4.5, more particularly at most 1:5.

3. The curable oligomer of claim 1 or 2, wherein ratio of y2:y1 may be at most 1:1.5, in particular at most 1:4, more particularly at most 1:6.

4. The curable oligomer of any of claims 1 to 3, wherein component a) comprises at least one compound selected from an aliphatic diepoxy, a bisphenol-based diglycidyl ether and combinations thereof; in particular an aliphatic diglycidyl ether, bisphenol-A-diglycidyl ether and combinations thereof; more preferably bisphenol-A-diglycidyl ether.

5. The curable oligomer of any of claims 1 to 3, wherein component a) comprises at least one aromatic diepoxy, preferably at least one aromatic diglycidyl ether, more preferably at least one bisphenol-based diglycidyl ether, even more preferably bisphenol-A-diglycidyl ether.

6. The curable oligomer of any of claims 1 to 3, wherein component a) comprises at least one aliphatic diepoxy, preferably at least one aliphatic diglycidyl ether.

7. The curable oligomer of any of claims 1 to 6, wherein component a) comprises at least one compound selected from 1,4-butanediol diglycidyl ether, 1,3-butanediol diglycidyl ether, 1,6-hexanediol diglycidyl ether, neopentyl glycol diglycidyl ether, ethylene glycol diglycidyl ether a polyethylene glycol diglycidyl ether, propylene glycol diglycidyl ether, a polypropylene glycol diglycidyl ether, 1,2 -or 1,4-cyclohexanedimethanol diglycidyl ether, hydrogenated bisphenol A diglycidyl ether, bisphenol-A-diglycidyl ether, bisphenol-AP-diglycidyl ether, bisphenol-AF-diglycidyl ether, bisphenol-B-diglycidyl ether, bisphenol-BP-diglycidyl ether, bisphenol-C-diglycidyl ether, bisphenol-C2-diglycidyl ether, bisphenol-F-diglycidyl ether, bisphenol-G-diglycidyl ether, bisphenol-M-diglycidyl ether, bisphenol-S-diglycidyl ether, bisphenol-P-diglycidyl ether, bisphenol-PH-diglycidyl ether, bisphenol-TMC-diglycidyl ether, bisphenol-Z-diglycidyl ether, dinitrobisphenol-A-diglycidyl ether, tetrabromobisphenol-A-diglycidyl ether and combinations thereof; in particular bisphenol-A-diglycidyl ether or 1,4-butanediol diglycidyl ether.

8. The curable oligomer of any of claims 1 to 7, wherein component b) comprises an α-β ethylenically unsaturated carboxylic acid.

9. The curable oligomer of any of claims 1 to 8, wherein component b) comprises at least one compound selected from acrylic acid, methacrylic acid, ethacrylic acid, crotonic acid, isocrotonic acid, angelic acid, tiglic acid, senecioic acid, acryloyloxypropionic acid, maleic acid, fumaric acid, or itaconic acid or combinations thereof, in particular at least one of acrylic acid or methacrylic acid .

10. The curable oligomer of any of claims 1 to 9, wherein component c) comprises a carboxylic acid bearing at least four carboxylic acid groups.

11. The curable oligomer of any of claims 1 to 10, wherein component c) comprises a mixture of at least one tricarboxylic acid and at least one tetracarboxylic acid.

12. The curable oligomer of any of claims 1 to 11, wherein component c) comprises at least one compound selected from citric acid; isocitric acid; 1,2,3-propanetricarboxylic acid; 1,2,4-butanetricarboxylic acid; 1,2,3,4 butane tetracarboxylic acid; 1,2,3,4-cyclobutanetetracarboxylic acid; 1,2,3,4-cyclopentanetetracarboxylic acid; 1,3,5-cyclohexanetricarboxylic acid; 1,2,4,5-cyclohexanetetracarboxylic acid; 1,3,5 benzenetricarboxylic acid; 1,2,4-benzenetricarboxylic acid; 1,2,4,5-benzenetetracarboxylic acid; 1,3,5,7-adamantane tetracarboxylic acid; 1,3,5,7 adamantane tetrabenzoic acid and combinations thereof.

13. The curable oligomer of any of claims 1 to 12, wherein the total weight of residues derived from the reaction of components a), b) and c) represents at least 90%, at least 95%, at least 98%, at least 99%, at least 99.5%, at least 99.9%, at least 99.99% or even 100% of the total weight of the curable oligomer.

14. A curable composition comprising the curable oligomer of any of claims 1 to 13 and at least one inhibitor and/or at least one ethylenically unsaturated compound other than the curable oligomer.

15. A method of preparing a curable oligomer, wherein the method comprises reacting a mixture comprising:
- x equivalents of a component a) comprising at least one diepoxy;
- y2 equivalents of a component c) comprising at least one polycarboxylic acid bearing at least three carboxylic acid groups; and
- optionally z1 equivalents of a component b) comprising at least one unsaturated carboxylic acid;
to provide an epoxy-capped prepolymer;
and then reacting the epoxy-capped prepolymer with z2 equivalents of a component b) comprising at least one unsaturated carboxylic acid;
wherein z1 + z2 = y1,
x is the number of moles of epoxy groups in component a), y1 is the number of moles of carboxylic acid groups in component b), and y2 is the number of moles of carboxylic acid groups in component c).

16. The method of claim 15, wherein the ratio of x:(y1+y2) is from 1:1.1 to 1:0.90, in particular from 1:1.09 to 1:0.91, more particularly from 1:1.08 to 1:0.92.

17. A method of preparing a curable oligomer, wherein the method comprises reacting a mixture comprising:
- x equivalents of a component a) comprising at least one diepoxy;
- y1 equivalents of a component b) comprising at least one unsaturated carboxylic acid; and
- y2 equivalents of a component c) comprising at least one polycarboxylic acid bearing at least three carboxylic acid groups,
to provide a curable oligomer;
wherein x is the number of moles of epoxy groups in component a), y1 is the number of moles of carboxylic acid groups in component b), and y2 is the number of moles of carboxylic acid groups in component c), the ratio of x:(y1+y2) is from 1:1.1 to 1:0.90, in particular from 1:1.09 to 1:0.91, more particularly from 1:1.08 to 1:0.92.

18. The method of any one of claims 15 to 17, wherein the ratio of y2:x is at most 1:4, in particular at most 1:4.5, more particularly at most 1:5.

19. The method of any one of claims 15 to 18, wherein component a) comprises at least one compound selected from an aliphatic diepoxy, a bisphenol-based diglycidyl ether and combinations thereof; in particular an aliphatic diglycidyl ether, bisphenol-A-diglycidyl ether and combinations thereof; more preferably bisphenol-A-diglycidyl ether.
